# FASCICULE DE BREVET EUROPEEN

(11) **EP 4 061 681 B1**
(45) Date de publication et mention de la délivrance du brevet: **22.05.2024**
(21) Numéro de dépôt: 20801341.7
(22) Date de dépôt: 14.10.2020
(51) Int. Cl.: B60W 30/14

(54) **SYSTÈME ET PROCÉDÉ DE RÉGULATION DE VITESSE D'UN VÉHICULE AUTOMOBILE**
SYSTEM UND VERFAHREN ZUR REGELUNG DER GESCHWINDIGKEIT EINES KRAFTFAHRZEUGS
SYSTEM AND METHOD FOR REGULATING THE SPEED OF A MOTOR VEHICLE

(30) Priorité: 18.11.2019 FR 1912821
(43) Date de publication de la demande: 28.09.2022
(73) Titulaire: Stellantis Auto SAS, 78300 Poissy (FR)
(72) Inventeur: HAOUAT, Nada, 92150 SURESNES (FR); DESCHAMPS, Vincent, 92240 MALAKOFF (FR); HENDI, Paul, 92370 CHAVILLE (FR)
(86) Numéro de dépôt international: PCT/FR2020/051817
(87) Numéro de publication internationale: WO 2021/099698

(56) Documents cités:
- DE-A1- 10 258 167
- DE-A1-102016 115 071
- US-A1- 2008 059 037

## Description

### DOMAINE TECHNIQUE

La présente invention concerne de manière générale des systèmes ou procédés d'assistance à la conduite d'un véhicule automobile et plus particulièrement à la régulation de la vitesse d'un véhicule.

### ART ANTÉRIEUR

Les documents US20130332044, WO2007070160 et US20090037062 décrivent des dispositifs ou procédés de régulation de la vitesse d'un véhicule en particulier lors de la prise d'un virage. Ces dispositifs ou procédés de régulation utilisent des données issues du système de navigation embarqué dans le véhicule. En fonction de ses données (par exemple : longueur du virage, degré de courbure du virage, type de conduite...) la vitesse du véhicule est adaptée tout le long de la prise du virage. Ces dispositifs ou procédé de régulation de la vitesse sont entièrement dépendant des données provenant du système de navigation.

Le document DE102016115071 concerne un procédé de régulation automatique d'une vitesse et/ou d'une accélération d'un véhicule automobile, prenant en compte une consigne d'un conducteur du véhicule automobile comme première grandeur d'entrée, dans le cas d'un autre véhicule qui se trouve sur la chaussée du véhicule automobile et circule devant le véhicule automobile, en tenant compte d'une distance par rapport au véhicule roulant devant comme deuxième grandeur d'entrée, la vitesse et/ou l'accélération du véhicule à moteur étant en outre déterminées comme troisième grandeur d'entrée en tenant compte d'une limitation de vitesse valable le une chaussée du véhicule à moteur, une géométrie de la chaussée en tant que quatrième grandeur d'entrée et au moins une condition environnementale régnant dans une région environnante du véhicule à moteur comme au moins une cinquième variable d'entrée. L'invention concerne également un dispositif de régulation automatique d'une vitesse et/ou d'une accélération d'un véhicule automobile, un système d'aide à la conduite et un véhicule automobile.

Le but de l'invention est de proposer un système et un procédé de régulation de la vitesse d'un véhicule s'affranchissant des données de cartographie du système de navigation d'un véhicule.

### RÉSUMÉ DE L'INVENTION

Dans ce but et dans un premier aspect, la présente invention concerne un système de régulation de la vitesse d'un véhicule automobile, le véhicule comprenant un dispositif de réception d'un signal d'une première balise située à l'extérieur du véhicule, un calculateur agencé pour ajuster la vitesse, caractérisé en ce que la première balise est située à proximité d'un virage et comprend un calculateur et une mémoire embarquée pour stocker des informations sur la configuration d'un virage et les conditions de passage du virage, un dispositif d'émission d'un signal représentatif de la configuration d'un virage et les conditions de passage du virage, le calculateur du véhicule étant agencé pour traiter le signal de la balise reçu via le dispositif de réception de sorte à ajuster la vitesse du véhicule en fonction de la configuration du virage et les conditions de passage du virage.

Selon l'invention, le système de régulation de la vitesse d'un véhicule automobile comprend un capteur de présence et de vitesse du véhicule arrivant à proximité du virage, ce capteur de présence comprend un dispositif d'émission d'un signal représentatif d'un véhicule arrivant à proximité du virage, la première balise comprenant un dispositif de réception du signal du capteur de présence et de vitesse du véhicule de sorte que le calculateur de la première balise ajuste les informations sur la configuration du virage et les conditions de passage du virage en fonction de la vitesse du véhicule détecté.

Selon une autre variante de réalisation, le système de régulation de la vitesse d'un véhicule automobile comprend au moins une deuxième balise positionnée le long de la trajectoire du virage, la deuxième balise comprenant un dispositif d'émission d'un signal représentatif de la position de la deuxième balise, le calculateur du véhicule est agencé pour traiter le signal de la deuxième balise reçu via le dispositif de réception de sorte à ajuster la vitesse du véhicule en fonction de la configuration du virage et les conditions de passage du virage.

Selon une autre variante de réalisation, la première balise est placée à l'entrée du virage dans le sens de circulation du véhicule.

Un deuxième aspect de la présente invention concerne un procédé de régulation de la vitesse d'un véhicule automobile comprenant une étape de réception d'un signal d'une première balise située à l'extérieur du véhicule par un dispositif de réception d'un signal du véhicule, le signal étant représentatif de la configuration d'un virage et des conditions de passage du virage et une étape de traitement du signal de la première balise par un calculateur du véhicule de sorte à ajuster la vitesse du véhicule lors du roulage du véhicule dans le virage.

Selon l'invention, le procédé de régulation de la vitesse d'un véhicule automobile comprend en outre une étape de détection de présence et de la vitesse du véhicule entrant dans le virage et une étape d'ajustement de la configuration du virage et des conditions de passage du virage en fonction de la vitesse du véhicule détecté transmise par le signal de la première balise.

Selon une autre variante de réalisation, le procédé de régulation de la vitesse d'un véhicule automobile comprend en outre une étape de réception d'un signal d'une deuxième balise située positionné le long de la trajectoire du virage par un dispositif de réception d'un signal du véhicule, le signal de la deuxième balise étant représentatif de la position de la deuxième balise et une étape de traitement du signal de la deuxième balise par un calculateur du véhicule de sorte à ajuster la vitesse du véhicule lors du passage du véhicule au niveau de la deuxième balise.

### BRÈVE DESCRIPTION DES FIGURES

D'autres caractéristiques et avantages de la présente invention apparaîtront plus clairement à la lecture de la description détaillée qui va suivre et qui présente différents modes de réalisation de l'invention donnés à titre d'exemples nullement limitatifs et illustrés par les figures annexées dans lesquelles :
[Fig. 1] représente un vue schématique du système de régulation de la vitesse d'un véhicule automobile selon l'invention,
[Fig. 2] représente un diagramme du procédé de régulation de la vitesse d'un véhicule automobile selon l'invention,

### DESCRIPTION DÉTAILLÉE

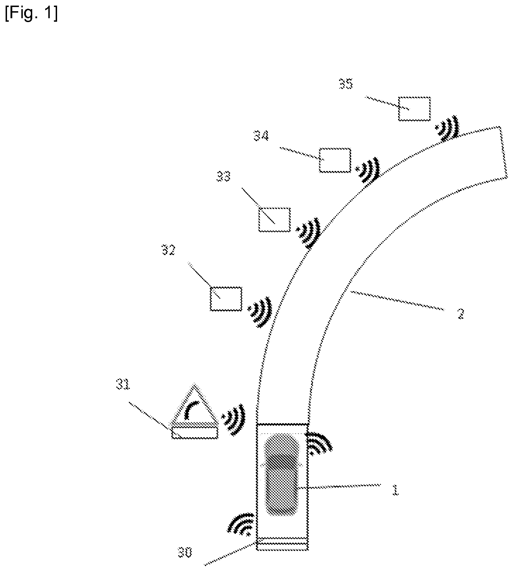

Le système et le procédé régulation de la vitesse d'un véhicule automobile vont à présent être décrits en référence aux figures 1 à 2.

De façon connue en soi, les véhicules automobiles récents sont équipés de dispositif de régulation de vitesse. Selon une première génération connue en soi, ces dispositifs de régulation de vitesse permettent de maintenir la vitesse du véhicule constante quel que soit le profil de la route. Le conducteur n'a plus besoin d'agir sur l'accélérateur et doit simplement maintenir le véhicule sur la trajectoire voulu à l'aide du volant. Dans cette première version, les dispositifs ne freinent pas le véhicule mais peuvent réduire l'accélération si le véhicule est en décente.

Selon une deuxième version connue en soi également, ces dispositifs de régulation peuvent s'adapter aux conditions de circulation et au profil de la route pour réguler la vitesse. Le véhicule est alors équipé de radar et/ou de caméra pour détecter des obstacles situés autour du véhicule ou permettant de suivre la signalisation horizontale de la route.

Ces dispositifs de régulation peuvent alors agir sur l'accélérateur, les freins et même sur la direction pour corriger une trajectoire.

Le système de régulation de vitesse selon l'invention est basé sur les dispositifs de régulation de vitesse de deuxième génération. Ainsi, le véhicule 1 comprend un calculateur capable d'intervenir sur la gestion moteur, les freins et éventuellement la direction pour respecter une consigne de régulation de vitesse fixée par l'utilisateur. Le véhicule comprend également un dispositif de réception de signaux provenant de l'extérieur du véhicule. Ce dispositif de réception est par exemple basé sur un standard de communication sans-fil à courte distance telle que Bluetooth, wifi, PC5, ITS, G5 ou longue distance telle que communication satellite, cellulaire (3G, 4G, 5G).

Selon l'invention, et comme le montre la figure 1, le système de régulation de vitesse comprend une première balise 31 situé à l'extérieure du véhicule. De préférence mais de façon non limitative, la première balise 31 est place à proximité d'un virage 2. La première balise 31 est par exemple positionnée à proximité de l'entrée du virage dans le sens de circulation des véhicules.

La première balise 31 comprend un calculateur, une mémoire embarquée et un dispositif de communication basé sur un ou plusieurs standards de communication mentionnés précédemment. Selon une variante de réalisation, la première balise peut également comprendre un ou plusieurs capteurs pour mesurer des conditions météorologiques au voisinage de la balise (température, hydrométrie, vitesse du vent, etc...).

La mémoire embarquée de la première balise 31 comprend des informations sur la configuration du virage 2 et les conditions de passage dans le virage 2. A titre d'exemples ces informations sont :
- Le degré de courbure du virage 2,
- La Longueur du virage 2,
- La trajectoire à suivre dans le virage 2,
- Les vitesses optimales à différente point particulier du virage 2 tels que à l'entrée du virage 2, à l'intérieur du virage 2 et à la sortie du virage 2.

Selon l'invention, la première balise 31 émet un signal représentatif de la configuration et des conditions de passage du virage 2 pour les véhicules qui circulent dans le virage. A la réception de ce signal provenant de la première balise 1 le calculateur du véhicule va ajuster les paramètres de fonctionnement du véhicule en fonction de ces informations de façon à ce que le véhicule circule dans le virage 2 de façon optimale et conformément aux informations délivrées par la première balise.

Si la première balise est équipée de capteurs par exemple de température, d'hydrométrie et/ou de vent, le calculateur de la première balise va ajuster les informations relatives aux conditions de passage dans le virage 2. Ainsi, si la température détectée est en dessous de zéro degré, le calculateur de la balise pourra réduire la vitesse optimale et/ou ajuster la trajectoire à suivre.

Le système de régulation de vitesse selon l'invention comprend un capteur 30 de présence et de vitesse du véhicule visible figure 1. Ce capteur 30 est par exemple formé par une boucle inductive ou tout autre capteur de détection de présence de véhicules ayant la capacité d'ignorer les déplacements d'humains et/ou vélos. Le capteur 30 récupère également la vitesse du véhicule soit par le réseau CAN du véhicule, soit en mesurant directement la vitesse du véhicule.

Le capteur 30 comprend un dispositif de communication basé sur un ou plusieurs standards de communication mentionnés précédemment pour transmettre mes informations de détection et de vitesse du véhicule 2 amorçant le virage 2. A réception de ces informations le calculateur de la première balise 31 calcule alors de façon dynamique les conditions optimales de passage en fonction de la vitesse d'entrée du véhicule détecté. Ces informations sont émises vers le véhicule 1 et récupéré par le calculateur pour ajuster la vitesse du véhicule en fonction de cette information.

Selon une autre variante de réalisation, le système de régulation de vitesse selon l'invention comprend au moins une deuxième balise 32, et/ou 33, et/ou 34, et/ou 35 visibles figure 1. Cette ou ces deuxièmes balises 32, 33, 34, 35 sont placées à proximité de la courbure du virage 2 à des points caractéristiques du virage 2. Ainsi, une deuxième balise peut être position à l'entrée 32 dans le sens de circulation du virage 2. D'autres deuxièmes balises peuvent être placées à l'intérieur du virage 33, 34 et/ou à la sortie du virage 35. Les deuxièmes balises 32, 33, 34, 35 comprennent un dispositif de communication basé sur un ou plusieurs standards de communication mentionnés précédemment pour transmettre un signal de position au véhicule.

Selon cette variante de réalisation, les informations transmises par le calculateur de la première balise 31 comprend des informations de changement de vitesse au niveau des différentes zones du virage 2 correspondant à la positon des deuxièmes balises 32, 33, 34, 35. Lors du passage du véhicule 1 au niveau d'une des deuxièmes balistes, le calculateur de régulation de la vitesse du véhicule 1 va ajuster la vitesse du véhicule conformément aux informations transmises par la première balise 31 et correspondant au passage du la zone du virage 2 correspondant à l'une des deuxièmes balises 32, 33, 34, 35.

Ainsi on comprend que l'ajustement de la vitesse du véhicule 2 n'est plus tributaire de donnée de navigation du véhicule 2 qui pourrait ne pas être accessible (par exemple dans un tunnel).

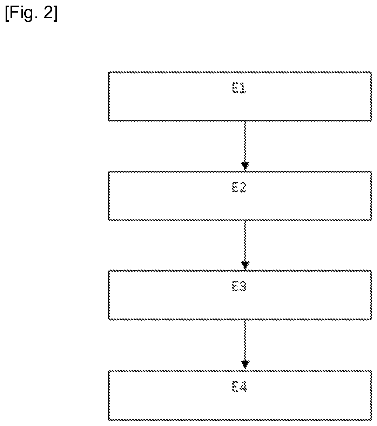

En référence à la figure 2, le procédé de régulation la vitesse en virage du véhicule selon l'invention comprend :
- une étape de réception (E3) du signal de la première balise (31) par le véhicule, le signal étant représentatif de la configuration du virage (2) et des conditions de passage du virage (2),
- une étape de traitement (E4) du signal de la première balise par un calculateur du véhicule de sorte à ajuster la vitesse du véhicule lors du roulage du véhicule dans le virage.

Selon l'invention toujours montrée figure 2, le procédé comprend en outre :
- une étape de détection (E1) de présence et de la vitesse du véhicule entrant dans le virage (2)
- une étape d'ajustement (E2) de la configuration d'un virage et des conditions de passage du virage en fonction de la vitesse du véhicule détecté transmise par le signal de la première balise.

Selon une autre variante de réalisation, le procédé comprend en outre :
- une étape de réception d'un signal d'une des deuxièmes balises 32, 33, 34, 35 positionnées le long de la trajectoire du virage (2) par un dispositif de réception d'un signal du véhicule, le signal de l'une des deuxièmes balises étant représentatif de la position de cette deuxième balise 32, 33, 34, 35
- une étape de traitement du signal de la deuxième balise par un calculateur du véhicule de sorte à ajuster la vitesse du véhicule 1 lors du passage du véhicule au niveau de cette deuxième balise 32, 33, 34, 35.

On comprendra que diverses modifications et/ou améliorations évidentes pour l'homme du métier peuvent être apportées aux différents modes de réalisation de l'invention décrits dans la présente description sans sortir du cadre de l'invention comme définit par les revendications.

## Revendications

1. Système de régulation de la vitesse d'un véhicule automobile (1), le système comprenant un véhicule est une première balise (31), le véhicule comprenant :
- un dispositif de réception d'un signal de la première balise située à l'extérieur du véhicule,
- un calculateur agencé pour ajuster la vitesse, la première balise (31) étant située à proximité d'un virage (2) et comprenant :
- un calculateur et une mémoire embarquée pour stocker des informations sur la configuration du virage (2) et les conditions de passage du virage (2),
- un dispositif d'émission d'un signal représentatif de la configuration d'un virage et les conditions de passage du virage,
le calculateur du véhicule étant agencé pour traiter le signal de la première balise (31) reçu via le dispositif de réception de sorte à ajuster la vitesse du véhicule (1) en fonction de la configuration du virage (2) et les conditions de passage du virage (2),
**caractérisé en ce que** le système comprend
- un capteur (30) de présence et de vitesse du véhicule (1) arrivant à proximité du virage (2), ce capteur (30) de présence comprend un dispositif d'émission d'un signal représentatif d'un véhicule arrivant à proximité du virage, la première balise (31) comprenant un dispositif de réception du signal du capteur (30) de présence et de vitesse du véhicule de sorte que le calculateur de la première balise ajuste les informations sur la configuration du virage et les conditions de passage du virage en fonction de la vitesse du véhicule détecté.

2. Système de régulation de la vitesse d'un véhicule automobile selon la revendication 1, **caractérisé en ce qu'**il comprend au moins une deuxième balise (32, 33, 34, 35) positionnée le long de la trajectoire du virage, la deuxième balise (32, 33, 34, 35) comprenant un dispositif d'émission d'un signal représentatif de la position de la deuxième balise (32, 33, 34, 35), le calculateur du véhicule est agencé pour traiter le signal de la deuxième balise reçu via le dispositif de réception de sorte à ajuster la vitesse du véhicule en fonction de la configuration du virage et les conditions de passage du virage.

3. Système de régulation de la vitesse d'un véhicule automobile selon l'une des revendications 1 ou 2, **caractérisé en ce que** la première balise (31) est placé à l'entrée du virage dans le sens de circulation du véhicule (1).

4. Procédé de régulation de la vitesse d'un véhicule automobile comprenant
- une étape de réception (E3) d'un signal d'une première balise située à l'extérieur du véhicule par un dispositif de réception d'un signal du véhicule, le signal étant représentatif de la configuration d'un virage et des conditions de passage du virage,
- une étape de traitement (E4) du signal de la première balise par un calculateur du véhicule de sorte à ajuster la vitesse du véhicule lors du roulage du véhicule dans le virage,
**caractérisé par**
- une étape de détection (E1) de présence et de la vitesse du véhicule entrant dans le virage,
- une étape d'ajustement (E2) par la première balise de la configuration du virage et des conditions de passage du virage en fonction de la vitesse du véhicule détecté transmise par le signal de la première balise.

5. Procédé de régulation de la vitesse d'un véhicule automobile selon la revendication 4 **caractérisé en ce qu'**il comprend en outre
- une étape de réception d'un signal d'une deuxième balise située positionné le long de la trajectoire du virage par un dispositif de réception d'un signal du véhicule, le signal de la deuxième balise étant représentatif de la position de la deuxième balise,
- une étape de traitement du signal de la deuxième balise par un calculateur du véhicule de sorte à ajuster la vitesse du véhicule lors du passage du véhicule au niveau de la deuxième balise.

## Patentansprüche

1. System zur Regelung der Geschwindigkeit eines Kraftfahrzeugs (1), wobei das System ein Fahrzeug umfasst, eine erste Bake (31), wobei das Fahrzeug Folgendes umfasst:
- eine Vorrichtung zum Empfangen eines Signals von der ersten Bake, die sich außerhalb des Fahrzeugs befindet,
- ein Computer zur Einstellung der Geschwindigkeit,
wobei sich die erste Bake (31) in der Nähe einer Kurve (2) befindet und Folgendes umfasst:
- einen Computer und einen Bordspeicher zum Speichern von Informationen über die Konfiguration der Kurve (2) und die Bedingungen für das Passieren der Kurve (2),
- eine Vorrichtung zum Senden eines Signals, das die Konfiguration einer Kurve und die Bedingungen für das Passieren der Kurve darstellt,
wobei der Fahrzeugcomputer dazu ausgelegt ist, das über die Empfangsvorrichtung empfangene Signal von der ersten Bake (31) zu verarbeiten, um die Geschwindigkeit des Fahrzeugs (1) entsprechend der Konfiguration der Kurve (2) und den Durchfahrtsbedingungen des Fahrzeugs anzupassen wiederum (2), **dadurch gekennzeichnet, dass** das System umfasst
- einen Sensor (30) für die Anwesenheit und Geschwindigkeit des in der Nähe der Kurve (2) ankommenden Fahrzeugs (1), wobei dieser Anwesenheitssensor (30) eine Vorrichtung zum Senden eines Signals umfasst, das für ein in der Nähe der Kurve (2) ankommendes Fahrzeug (1) repräsentativ ist Bake (31), die eine Vorrichtung zum Empfangen des Signals vom Fahrzeuganwesenheits- und Geschwindigkeitssensor (30) umfasst, so dass der Computer der ersten Bake die Informationen über die Konfiguration der Kurve und die Durchfahrtsbedingungen der Kurve abhängig von der Geschwindigkeit anpasst das erkannte Fahrzeug.

2. System zur Geschwindigkeitsregelung eines Kraftfahrzeugs nach Anspruch 1, **dadurch gekennzeichnet, dass** es mindestens eine zweite Bake (32, 33, 34, 35) umfasst, die entlang der Kurvenbahn positioniert ist, wobei die zweite Bake (32) , 33, 34, 35) mit einer Vorrichtung zum Senden eines Signals, das die Position der zweiten Bake (32, 33, 34, 35) darstellt, wobei der Fahrzeugcomputer dazu eingerichtet ist, das über die Empfangsvorrichtung empfangene Signal der zweiten Bake zu verarbeiten um die Geschwindigkeit des Fahrzeugs entsprechend der Konfiguration der Kurve und den Bedingungen für das Passieren der Kurve anzupassen.

3. System zur Geschwindigkeitsregelung eines Kraftfahrzeugs nach einem der Ansprüche 1 oder 2, **dadurch gekennzeichnet, dass** die erste Bake (31) am Kurveneingang in Fahrtrichtung des Fahrzeugs (1) platziert ist.

4. Verfahren zur Regelung der Geschwindigkeit eines Kraftfahrzeugs, umfassend:
- einen Schritt des Empfangens (E3) eines Signals von einer ersten Bake, die sich außerhalb des Fahrzeugs befindet, durch eine Vorrichtung zum Empfangen eines Signals vom Fahrzeug, wobei das Signal repräsentativ für die Konfiguration einer Kurve und die Bedingungen beim Passieren der Kurve ist,
- einen Schritt der Verarbeitung (E4) des Signals von der ersten Bake durch einen Fahrzeugcomputer, um die Geschwindigkeit des Fahrzeugs anzupassen, wenn das Fahrzeug um die Kurve rollt, **gekennzeichnet durch**
- einen Erkennungsschritt (E1) der Anwesenheit und Geschwindigkeit des in die Kurve einfahrenden Fahrzeugs,
- einen Schritt der Anpassung (E2) durch die erste Bake der Konfiguration der Abbiegung und der Bedingungen für das Durchfahren der Abbiegung in Abhängigkeit von der Geschwindigkeit des erfassten Fahrzeugs, die durch das Signal der ersten Bake übertragen wird.

5. Verfahren zur Regelung der Geschwindigkeit eines Kraftfahrzeugs nach Anspruch 4, **dadurch gekennzeichnet, dass** es weiterhin Folgendes umfasst:
- einen Schritt des Empfangens eines Signals von einer zweiten Bake, die sich entlang der Kurvenbahn befindet, durch eine Vorrichtung zum Empfangen eines Signals vom Fahrzeug, wobei das Signal von der zweiten Bake repräsentativ für die Position der zweiten Bake ist,
- einen Schritt der Verarbeitung des Signals von der zweiten Bake durch einen Fahrzeugcomputer, um die Geschwindigkeit des Fahrzeugs anzupassen, wenn das Fahrzeug die zweite Bake passiert.

## Claims

1. System for regulating the speed of a motor vehicle (1), the system comprising a vehicle is a first beacon (31), the vehicle comprising:
- a device for receiving a signal from the first beacon located outside the vehicle,
- a computer designed to adjust the speed,
the first beacon (31) being located near a bend (2) and comprising:
- a computer and an on-board memory to store information on the configuration of the turn (2) and the conditions for passing the turn (2),
- a device for transmitting a signal representative of the configuration of a turn and the conditions for passing the turn,
the vehicle computer being arranged to process the signal from the first beacon (31) received via the receiving device so as to adjust the speed of the vehicle (1) according to the configuration of the turn (2) and the conditions of passage of the turn (2), **characterized in that** the system comprises
- a sensor (30) for the presence and speed of the vehicle (1) arriving near the bend (2), this presence sensor (30) comprises a device for transmitting a signal representative of a vehicle arriving nearby of the turn, the first beacon (31) comprising a device for receiving the signal from the vehicle presence and speed sensor (30) so that the computer of the first beacon adjusts the information on the configuration of the turn and the passage conditions of the turn depending on the speed of the detected vehicle.

2. System for regulating the speed of a motor vehicle according to claim 1, **characterized in that** it comprises at least one second beacon (32, 33, 34, 35) positioned along the trajectory of the turn, the second beacon (32, 33, 34, 35) comprising a device for transmitting a signal representative of the position of the second beacon (32, 33, 34, 35), the vehicle computer is arranged to process the signal of the second beacon received via the receiving device so as to adjust the speed of the vehicle according to the configuration of the turn and the conditions for passing the turn.

3. System for regulating the speed of a motor vehicle according to one of claims 1 or 2, **characterized in that** the first beacon (31) is placed at the entrance to the bend in the direction of movement of the vehicle (1).

4. Method for regulating the speed of a motor vehicle comprising
- a step of receiving (E3) a signal from a first beacon located outside the vehicle by a device for receiving a signal from the vehicle, the signal being representative of the configuration of a turn and the conditions passing the turn,
- a step of processing (E4) the signal from the first beacon by a vehicle computer so as to adjust the speed of the vehicle when the vehicle is rolling around the bend, **characterized by**
- a detection step (E1) of the presence and speed of the vehicle entering the bend,
- a step of adjustment (E2) by the first beacon of the configuration of the turn and the conditions for passing the turn as a function of the speed of the detected vehicle transmitted by the signal from the first beacon.

5. Method for regulating the speed of a motor vehicle according to claim 4 **characterized in that** it further comprises
- a step of receiving a signal from a second beacon located positioned along the trajectory of the turn by a device for receiving a signal from the vehicle, the signal from the second beacon being representative of the position of the second beacon ,
- a step of processing the signal from the second beacon by a vehicle computer so as to adjust the speed of the vehicle when the vehicle passes the second beacon.
